# EUROPEAN PATENT APPLICATION

(11) **EP 0 739 966 A1**
(43) Date of publication of application: **30.10.1996**
(21) Application number: 96302732.1
(22) Date of filing: 18.04.1996
(51) Int. Cl.: C09K 5/00, C23F 11/10

(54) **Antifreeze composition and aqueous fluid containing said composition**

(30) Priority: 28.04.1995 FR 9505439
(71) Applicant: BP Chemicals Limited, London EC2M 7BA (GB); BP CHEMICALS S.N.C., 92400 Courbevoie (FR)
(72) Inventor: Rousselon, Valerie, 13117 Lavera (FR)
(74) Representative: Hymers, Ronald Robson

(57) **Abstract**

The present invention relates to an antifreeze composition containing a water-soluble liquid alcohol and a corrosion inhibitor system substantially free of silicate and containing (a) at least one carboxylic acid or an alkali metal, ammonium or amine salt of the said acid, and (b) at least one organic silane. The invention also relates to an aqueous heat transfer fluid containing the antifreeze composition mixed with water. The composition and the aqueous fluid have noteworthy anticorrosive properties with respect to metals such as aluminium and alloys thereof.

## Description

The present invention relates to a novel water-soluble antifreeze composition containing corrosion inhibitor additives and an aqueous heat transfer fluid containing the antifreeze composition, and to a process for the treatment of an aqueous heat transfer fluid for the purpose of reducing the corrosion of metals in contact with the said fluid.

It is known to use aqueous heat transfer fluids in heat exchangers such as central heating circuits or internal combustion engine cooling circuits. Generally, the heat transfer fluid comes into contact with various metals or alloys which form the different parts of these circuits, for example such as copper, brass, steel, cast iron, magnesium, aluminium and alloys of tin and lead which form solders. Thus, the problems of corrosion become particularly difficult and complex, not only because of the need to protect each of the metals or alloys against corrosion individually, but also because of galvanic phenomena which may occur between the various metals or alloys present.

In the case of certain heat exchanger circuits such as those for cooling internal combustion engines, in particular those operating on motor vehicles, the problems of protection against corrosion involve, in particular, aqueous heat transfer fluids containing antifreeze compositions. The antifreeze compositions essentially comprise a water-soluble organic compound which lowers the freezing point of the heat transfer fluid, in particular a liquid alcohol such as a glycol, for example monoethylene glycol or monopropylene glycol. Corrosion inhibitors are generally added to these compositions, in low proportion. The antifreeze compositions thus obtained are then used as a mixture with water in order to prepare the ready-to-use aqueous heat transfer fluid. The weight ratio of the amount of antifreeze composition to that of water is determined by the desired freezing point of the fluid.

Internal combustion engines, in particular those operating on motor vehicles, nowadays contain large sections made of light metal, such as aluminium or alloys thereof, with the aim of lightening the weight of motor vehicles and, consequently, of reducing the fuel consumption of vehicles.

EP-A 0,564,721 describes an antifreeze composition based essentially on glycol and on a corrosion inhibitor system containing a C₅ to C₁₆ aliphatic monocarboxylic acid or the alkali metal, ammonium or amine salt of the said acid, a triazole of a hydrocarbon group and an imidazole. It also describes the use of a silicate and more particularly the use of sodium metasilicate in combination with a silane in order to stabilize it. It has been observed that when the antifreeze composition is used in the cooling circuits of an internal combustion engine containing large sections made of light metal such as aluminium or one of the alloys thereof, the anticorrosive protection of this metal or of the alloys thereof is not sufficiently ensured, especially over a long period.

EP-A 0,352,120 describes an antifreeze composition based essentially on glycol and on a corrosion inhibitor system containing in particular a borate, a nitrate, a triazole and a silicate used in combination with a silane in order to stabilize it. The presence of silane with silicate avoids the formation of gel in the antifreeze composition.

A novel antifreeze composition has now been found which makes it possible to solve the above problems and, in particular, to improve the anticorrosive properties with respect to metals, in particular aluminium and alloys thereof, this improvement being noteworthy when compared with the known previous compositions and over a particularly long period. The antifreeze composition of the present invention does not produce any gel and exhibits an anticorrosion protection for aluminium or aluminium alloys as good as, or even better than the known compositions using the combination of silicate with silane, and with a much longer period of time.

The subject of the present invention is thus an antifreeze composition comprising a liquid alcohol, which is soluble in water and lowers the freezing point, and a corrosion inhibitor system, characterized in that the corrosion inhibitor system is substantially free of silicate and comprises (a) at least one carboxylic acid or the alkali metal, ammonium or amine salt of the said acid, and (b) at least one organic silane.

The corrosion inhibitor system may be used as a corrosion inhibitor in an aqueous heat transfer fluid, in particular in antifreeze compositions for the cooling circuit of an internal combustion engine, in particular a motor vehicle containing large sections made of a light metal, in particular aluminium or one of the alloys thereof. The present antifreeze composition is most particularly suitable when it is used in cooling circuits in which at least 5 %, preferably at least 10 %, for example 10 to 60 %, of the internal surfaces are made of aluminium or one of the alloys thereof, and, consequently, are in direct contact with the said composition. The combination of corrosion inhibitors of the present antifreeze composition has a remarkable effect on the anticorrosive protection of aluminium and the alloys thereof, while at the same time maintaining a high level of protection with respect to the other metals usually present in the engine cooling circuits of a motor vehicle, such as copper, magnesium, steel, cast iron, brass or solder. The noteworthy properties observed result from a synergy effect between the main constituents of the combination of the corrosion inhibitor system of the present invention.

More particularly, the antifreeze composition may contain from 0.1 to 10 %, preferably from 0.5 to 7 % and in particular from 1 to 5 %, by weight of one or more carboxylic acids or the corresponding salts thereof mentioned above.

The carboxylic acid or acids may be chosen from monocarboxylic, aliphatic, alicyclic or aromatic acids (A), preferably C5 to C10 acids, in particular n-pentanoic acid, n-hexanoic acid, n-heptanoic acid, 2-ethylhexanoic acid, n-octanoic acid and isoheptanoic acid. They may be chosen from benzoic acid, ortho-, meta- and para-ethylbenzoic acids or cinnamic acid. They may also be chosen from aromatic or aliphatic dicarboxylic acids (B) containing a saturated or unsaturated carbon chain, preferably C₄ to C₁₂ acids, in particular succinic acid, adipic acid, sebacic acid, itaconic acid, azelaic acid, ortho-, meta- or para-phthalic acid, 2-methyleneazelaic or muconic acid. An aliphatic or alicyclic carboxylic acid (A) or dicarboxylic acid (B) is preferably used. It may be advantageous that the carboxylic acid(s) be not chosen amongst the group consisting of the hydroxybenzoic acids.

A mixture of at least two of these acids or of the corresponding salts mentioned above may preferably be used. Aliphatic or alicyclic acids (A) and (B) are preferably used. It is possible in particular to use at least two acids (A) or at least two acids (B), or alternatively at least one acid (A) and at least one acid (B), which may preferably be used in amounts such that the molar ratio between the acid or acids (B) or the corresponding salts thereof and the acid or acids (A) or the corresponding salts thereof is from 0.1:1 to 10:1, preferably from 0.5:1 to 5:1 and in particular from 1:1 to 4:1.

The antifreeze composition contains an organic silane in an amount which may range from 0.01 to 2 %, preferably from 0.03 to 1 %. The organic silane used preferably has the following general formula:

Si (OR¹¹)₄₋ₙ (R¹²)ₙ

in which n is an integer or fraction ranging from 1 to 3, R¹¹ is an organic radical linked to the oxygen atom by a carbon-oxygen bond, a hydrogen atom or an alkali metal such as sodium or potassium and R¹² is an organic radical linked to the silicon atom by a silicon-carbon bond.

According to the invention, the silane may have at least one and at most three radicals R¹² which are identical or different. Moreover, it may contain 4-n radicals R¹¹. These radicals R¹¹ may be identical or different.

More particularly, R¹¹ may be a linear or branched alkyl radical having, for example, from 1 to 10 carbon atoms, such as a methyl radical or an ethyl radical. The radical R¹¹ may also be a cyclic alkyl or aryl or aralkyl radical containing, for example, from 6 to 14 carbon atoms, such as a phenyl or benzyl radical.

The radical R¹² may be a linear or branched alkyl radical having, for example, from 1 to 10 carbon atoms, such as a methyl radical or an ethyl radical. It may also be a cyclic alkyl or aryl or aralkyl radical containing, for example, from 6 to 14 carbon atoms, such as a phenyl or benzyl radical.

The radical R¹² may also be a radical having the general formula:

-CH₂CH₂CH₂-(OCHR¹³CH₂)ₘ-OR¹⁴

in which m is an integer or fraction which is usually between 1 and 20, preferably between 3 and 10, R¹³ is a hydrogen atom or an alkyl radical such as a methyl radical and R¹⁴ is an alkyl radical having, for example, from 1 to 10 carbon atoms, such as a methyl radical.

The radical R¹² may also have the following general formula:

-(CH₂)ₚ-Z

in which p is an integer ranging, for example, from 1 to 10 and Z is an organic function, preferably a polar one, such as a phosphonate, an amine, a sulphate, a carboxylate, a diazole or alternatively an anhydride such as succinic anhydride.

By way of example, it is possible to use an organic silane having the general formula:

(CH₃-O)₃Si-CH₂CH₂CH₂-(OCH₂CH₂)ₘ-OCH₃

with m preferably being between 5 and 10. More particularly, it is possible to use the silane "Y 5560" ® sold by the company "OSI Specialities" and having the following formula

(CH₃-O)₃Si-CH₂CH₂CH₂-(OCH₂CH₂)₇-OCH₃

It is also possible to use the compound "GF 20" ® sold by the company Wacker and having the formula

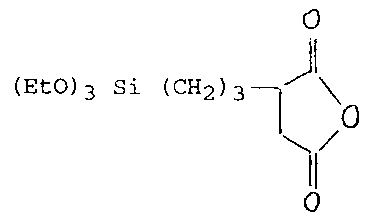

It is also possible to use the compound "Q1 6083" ® by the company Dow Corning and having the general formula 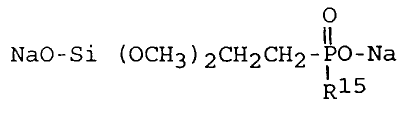 in which R¹⁵ is an alkyl radical having, for example, from 1 to 10 carbon atoms.

It is possible to use the ammonium compound "SJ 35/4" ® sold by the company Goldschmidt and having the formula

(HO)₃-Si-(CH₂)₃OSO₃, NH₄

It is also possible to use the compound having the formula

(MeO)₃-Si-(CH₂)₃NH(CH₂)₂NH₂

Lastly, it is possible to use the compound having a diazole function and of formula

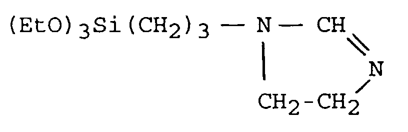

It is understood that the definition of the organic silane(s) used in the composition of the present invention excludes the group consisting of silicone or silicone resins and (poly)siloxanes.

According to the present invention, the antifreeze composition is substantially free of silicate. Indeed, it has been found, quite surprisingly, that organic silane was an excellent anticorrosion agent when it was used in the substantial absence of silicate and that the properties of the antifreeze composition were not affected by the absence of silicate. On the contrary, a synergy effect has been found when the silane is employed in combination with at least one of the organic acids or salts mentioned above.

Moreover, the antifreeze composition may very advantageously contain at least one 1,3-diazole in an amount which may range from 0.01 to 2 %, preferably from 0.05 to 1 %, by weight.

More particularly, the 1,3-diazole may be chosen from:
- imidazole or N- and/or C-substituted alkyl, aryl or aralkyl derivatives of imidazole corresponding in particular to the formula: 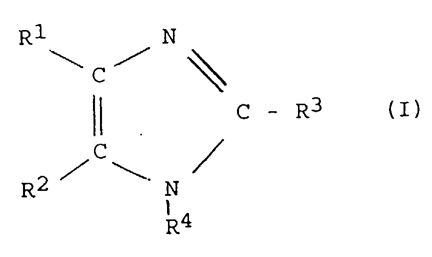 in which R¹, R² and R³, being identical or different, represent a hydrogen atom or a linear or branched alkyl radical, in particular a C₁ to C₆ and preferably a C₁ to C₄ alkyl radical such as the methyl or ethyl radical, or an aryl radical, in particular a C₆ to C₁₂ and preferably a C₆ to C₁₀ aryl radical such as the phenyl or naphthyl radical, or an aralkyl radical, in particular a C₇ to C₁₄ and preferably a C₇ to C₁₁ aralkyl radical such as the benzyl radical, and R⁴ preferably represents a hydrogen atom, or a hydrocarbon radical, for example an alkyl, aryl or aralkyl radical and in particular a C₁ to C₁₄ alkyl, aryl or aralkyl radical, such as the methyl, ethyl, phenyl or benzyl radicals, and which may contain in particular at least one amine function, preferably a tertiary amine function, and optionally at least one alcohol function, e.g. an ethoxylated imidazole,
- benzimidazole or N- and/or C-substituted alkyl, aryl or aralkyl derivatives of benzimidazole corresponding in particular to the formula: 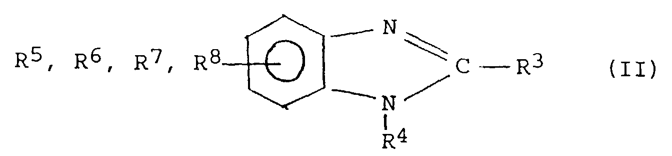 in which R³ and R⁴ have the same definitions as above, R³ moreover representing the -SH radical, and R⁵, R⁶, R⁷ and R⁸, being identical or different, represent a hydrogen atom or a linear or branched alkyl radical, in particular a C₁ to C₆ and preferably a C₁ to C₄ alkyl radical such as the methyl or ethyl radical, e.g. an ethoxylated benzimidazole and
- imidazoline or N- and/or C-substituted alkyl, aryl or aralkyl derivatives of imidazoline corresponding in particular to the formula: 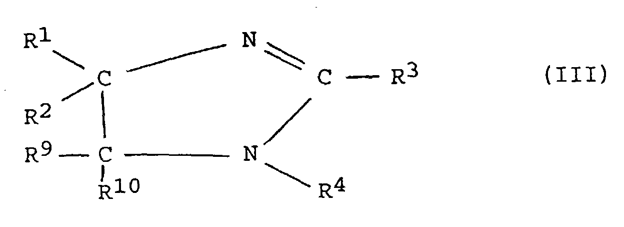 in which R¹, R², R³ and R⁴ have the same definitions as above, and R⁹ and R¹⁰, being identical or different, have the same definitions as those of R¹ and R², Benzimidazole or more particularly imidazole is preferably used.

The weight percentages given above are based on the antifreeze composition, it being understood that the composition may moreover contain other additives.

Thus, a molybdate of an alkali metal such as sodium or potassium, or of ammonium, may advantageously be used in the antifreeze composition and may be combined with the corrosion inhibitor system combination of the present invention. The composition may comprise in particular from 0.01 to 1.5 %, preferably from 0.05 to 0.5 %, by weight of such a molybdate, these percentages being expressed on the basis of the antifreeze composition.

A polyol, in particular a C₅ to C₁₂ polyol, which may contain from 5 to 12 alcohol functions and possess no reductive power may also be advantageously used in the composition and may thus be combined with the corrosion inhibitor system combination of the present invention. Sorbitol, xylitol, mannitol or sucrose is preferably used. However, sorbitol is preferred. The composition may in particular comprise from 0.05 to 2.5 % and preferably from 0.1 to 1.5 % by weight of polyol, the percentages being expressed on the basis of the antifreeze composition.

Other additives may also be used in the composition and may thus be combined with the corrosion inhibitor system combination of the invention:
- an alkali metal borate such as sodium or potassium tetraborate, in particular in a proportion of from 0.5 to 5 % by weight relative to the antifreeze composition,
- an alkali metal or alkaline-earth metal nitrate such as sodium or magnesium nitrate, in particular in a proportion of from 0.01 to 0.5 % by weight relative to the antifreeze composition,
- an alkali metal or amine phosphate, in particular in a proportion of from 0.5 to 5 % by weight relative to the antifreeze composition,
- a triazole compound, in particular a C-substituted and/or N-substituted triazole derivative, preferably an aromatic triazole such as benzotriazole or tolyltriazole or a mixture of tolytriazole and benzotriazole e.g. in a weight ratio from 1:10 to 10:1, e.g. 4:1 respectively, preferably a N-substituted triazole derivative with a hydrocarbon radical which may in particular contain at least one amine function, in particular a tertiary amine function, and preferably at least one alcohol function, for example two alcohol functions, and which may correspond to the formula: 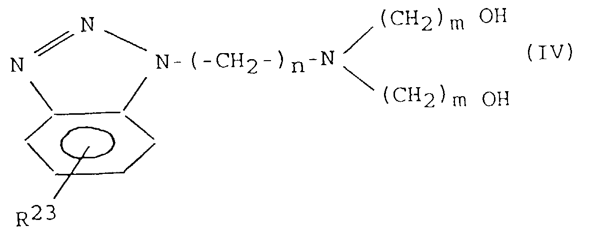 in which R²³ represents a hydrogen atom or an alkyl radical, in particular a C₁ to C₄ alkyl radical such as the methyl or ethyl radical, n = 1 to 6, preferably n = 1 to 4, in particular n = 1, and m = 1 to 4, in particular m = 1 or 2; tolyltriazole or an N-substituted benzotriazole or tolyltriazole derivative such as that sold by CIBA under the reference "Irgamet 42" is preferred; the triazole compound may be used in a proportion ranging from 0.02 to 0.6 % by weight relative to the antifreeze composition,
- a thiazole, benzothiazole or mercaptobenzothiazole compound or the alkali metal salts thereof such as the sodium or potassium salt, in particular in a proportion ranging from 0.01 to 0.5 % by weight relative to the antifreeze composition,
- at least one inorganic base such as sodium hydroxide or potassium hydroxide, which is intended to neutralize the acids and other compounds present and to form the corresponding salts,
- antifoaming and antifouling agents, stabilizers, anti-incrustants and agents for sequestering alkaline-earth metals and other divalent metal ions, such as a poly(aldehydocarboxylic acid) salt.

The antifreeze composition contains, as essential or major component by weight, a water-soluble liquid alcohol which allows the freezing point to be lowered. The liquid alcohol is generally a glycol or a glycol ether. The glycol or glycol ether which may be used includes a glycol such as monoethylene glycol, diethylene glycol, monopropylene glycol or dipropylene glycol, or a glycol ether such as the methyl, ethyl, propyl or butyl ether of monoethylene glycol, of diethylene glycol, of monopropylene glycol or of dipropylene glycol. Monoethylene glycol or monopropylene glycol is particularly preferred.

The present invention thus relates to an aqueous heat transfer fluid having a lowered freezing point, containing water and from 10 to 90 %, preferably from 25 to 65 %, by weight of the antifreeze composition described above and containing in particular the corrosion inhibitor system combination, the percentages by weight being based on the aqueous heat transfer fluid.

The present invention also relates to a process for the treatment of an aqueous fluid containing a liquid alcohol, which is soluble in water and lowers the freezing point, in order to reduce the corrosion of metals in contact with the fluid by addition of a corrosion inhibitor system, characterized in that the corrosion inhibitor system is substantially free of silicate and comprises:
(a) at least one carboxylic acid or an alkali metal, ammonium or amine salt of the said acid, and
(b) at least one organic silane.

The corrosion inhibitor system may moreover advantageously comprise other additives such as those mentioned above.

The present invention is illustrated by the example which follows.

### Example

The following antifreeze composition based on monoethylene glycol is prepared, containing by weight:

| | % weight |
|---|---|
| - monoethylene glycol | 92.65 |
| - water | 1.50 |
| - sebacic acid | 2.00 |
| - succinic acid | 1.60 |
| - benzimidazole | 0.05 |
| - tolyltriazole | 0.20 |
| - silane "GF 20" ® (1) | 0.05 |
| - sodium hydroxide | 1.95 |

| | |
|---|---|
| (1) sold by Wacker | |

One or more aqueous fluids are prepared from this antifreeze composition, with which fluids various measurements are taken or various tests are carried out. Thus, the pH is measured according to the method ASTM-D-1287/85 for an aqueous fluid containing 33 % by volume of antifreeze composition. The alkalinity reserve is also measured, according to the method ASTM-D-1121/88, as well as the rate of corrosion of aluminium according to the method GFC-L 108-A-90.
- pH = 8.02
- Alkalinity reserve = 13.0 ml 0.1 N HCl
- Rate of corrosion = 0.20 mg/cm²/week
   No gel is observed.

## Claims

1. Antifreeze composition comprising a liquid alcohol, which is soluble in water and lowers the freezing point, and a corrosion inhibitor system, characterized in that the corrosion inhibitor system is substantially free of silicate and comprises:
(a) at least one carboxylic acid or an alkali metal, ammonium or amine salt of the said acid, and
(b) at least one organic silane.

2. Antifreeze composition according to Claim 1, characterized in that it comprises:
(a) from 0.1 to 10 % by weight of carboxylic acid or acids or of the corresponding salt or salts, and
(b) from 0.01 to 2 % by weight of organic silane.

3. Antifreeze composition according to Claim 1 or 2, characterized in that the carboxylic acid or acids are chosen from aliphatic, alicyclic or aromatic monocarboxylic acids (A) and aromatic or aliphatic dicarboxylic acids (B) containing a saturated or unsaturated carbon chain.

4. Antifreeze composition according to Claim 3, characterized in that at least two carboxylic acids are chosen from at least two acids (A), or at least two acids (B), or at least one acid (A) and at least one acid (B).

5. Antifreeze composition according to any one of Claims 1 to 4, characterized in that the organic silane has the general formula:
Si (OR¹¹)₄₋ₙ (R¹²)ₙ
in which n is an integer or fraction ranging from 1 to 3, R¹¹ is an organic radical linked to the oxygen atom by a carbon-oxygen bond, a hydrogen atom or an alkali metal and R¹² is an organic radical linked to the silicon atom by a silicon-carbon bond.

6. Antifreeze composition according to Claim 5, characterized in that the radical R¹¹ of the organic silane is a linear or branched alkyl radical having from 1 to 10 carbon atoms or a cyclic alkyl, aryl or aralkyl radical having from 6 to 14 carbon atoms.

7. Antifreeze composition according to Claim 5 or 6, characterized in that the radical R¹² of the organic silane is a linear or branched alkyl radical having from 1 to 10 carbon atoms or a cyclic alkyl, aryl or aralkyl radical having from 6 to 14 carbon atoms.

8. Antifreeze composition according to Claim 5 or 6, characterized in that the radical R¹² of the organic silane has the formula:
-CH₂CH₂CH₂-(OCHR¹³CH₂)ₘ-OR¹⁴
in which m is an integer or fraction between 1 and 20, R¹³ is a hydrogen atom or an alkyl radical and R¹⁴ is an alkyl radical having from 1 to 10 carbon atoms.

9. Antifreeze composition according to Claim 5 or 6, characterized in that the radical R¹² of the organic silane has the formula:
-(CH₂)ₚ-Z
in which p is an integer ranging from 1 to 10 and Z is a polar organic function chosen from a phosphonate, an amine, a sulphate, a carboxylate, a diazole or alternatively an anhydride.

10. Antifreeze composition according to any one of Claims 1 to 9, characterized in that it also comprises a 1,3-diazole chosen from:
- imidazole or N- and/or C-substituted alkyl, aryl or aralkyl derivatives of imidazole,
- benzimidazole or N- and/or C-substituted alkyl, aryl or aralkyl derivatives of benzimidazole, and
- imidazoline or N- and/or C-substituted alkyl, aryl or aralkyl derivatives of imidazoline.

11. Antifreeze composition according to Claim 10, characterized in that it comprises from 0.01 to 2 % by weight of a 1,3-diazole.

12. Antifreeze composition according to any one of Claims 1 to 11, characterized in that the corrosion inhibitor system also comprises an alkali metal or ammonium molybdate.

13. Aqueous heat transfer fluid having a lowered freezing point, containing water and from 10 to 90 % by weight of the antifreeze composition according to any one of Claims 1 to 12.

14. Process for the treatment of an aqueous fluid containing a liquid alcohol, which is soluble in water and lowers the freezing point, in order to reduce the corrosion of metals in contact with the fluid by addition of a corrosion inhibitor system, characterized in that the corrosion inhibitor system is substantially free of silicate and comprises:
(a) at least one carboxylic acid or an alkali metal, ammonium or amine salt of the said acid, and
(b) at least one organic silane.
